# EUROPEAN PATENT SPECIFICATION

(11) **EP 2 666 816 B1**
(45) Date of publication and mention of the grant of the patent: **24.08.2016**
(21) Application number: 12736660.7
(22) Date of filing: 18.01.2012
(51) Int. Cl.: C08L 21/00, B60C 1/00, C08K 3/06, C08K 5/09, C08K 5/44, D07B 1/06, D07B 1/16, B60C 9/00, C08K 5/00, C08K 5/098

(54) **STEEL CORD-RUBBER COMPOSITE**
KAUTSCHUK-STAHL-SEILVERBUNDSTOFF
COMPOSITE CÂBLE D'ACIER-CAOUTCHOUC

(30) Priority: 18.01.2011 JP 2011008123
(43) Date of publication of application: 27.11.2013
(73) Proprietor: Bridgestone Corporation, Tokyo 104-8340 (JP)
(72) Inventor: TAHARA, Seiichi, Kodaira-shi Tokyo 187-8531 (JP)
(74) Representative: Lamb, Martin John Carstairs
(86) International application number: PCT/JP2012/000289
(87) International publication number: WO 2012/098880

(56) References cited:
- EP-A2- 1 258 338
- WO-A1-97/49776
- WO-A1-2009/148179
- DE-A1- 19 743 750
- JP-A- 11 323 283
- JP-A- 2009 137 539
- JP-A- 2009 215 673
- JP-A- 2011 157 525
- Struktol Company of America: "Struktol (RTM) Activator 73A, Activator 73 LM - Multifunctional Cure Activator - Technical data sheet", , 9 August 2004 (2004-08-09), XP002726630, Ohio, USA Retrieved from the Internet: URL:http://www.struktol.com/pdfs/TD%20Acti vator%2073A%2073LM.PDF [retrieved on 2014-07-03]

## Description

### TECHNICAL FIELD

The present invention relates to a steel cord-rubber composite, and more particularly, to a steel cord-rubber composite that, even when a rubber composition constituting coating rubber does not contain cobalt salt, has excellent adhesion to a steel cord and is capable of suppressing a decrease in modulus.

### BACKGROUND ART

Rubber products such as automobile tires, conveyor belts, hoses and the like which are required to be particularly strong, for the purpose of improving strength and durability by reinforcing rubber, employ the steel cord-rubber composite constituted by using a metal reinforcing member such as a steel cord and the like covered with coating rubber. Here, the steel cord-rubber composite, to provide a high reinforcing effect and win credibility, is required to have stable and strong adhesion between the coating rubber and the metal reinforcing member.

To obtain the steel cord-rubber composite having stable and strong adhesion between the coating rubber and the metal reinforcing member, widely adopted is direct vulcanizing adhesion for embedding the metal reinforcing member such as galvanized or brass-plated steel cord in the coating rubber containing sulfur and, at heating vulcanization of the rubber, adhering the metal reinforcing member and the coating rubber. In order to improve adhesion between the coating rubber and the metal reinforcing member by the direct vulcanizing adhesion, the direct vulcanizing adhesion has been studied in various manners.

As disclosed in Patent Document 1, for example, there is a technique for washing a surface of a steel wire and a surface of the steel cord that are to be used in acid solution or alkaline solution to remove phosphorous compound (derived from lubricant used in manufacturing the steel cord), which acts as an adhering reaction inhibitor, thereby improving adhesion to the coating rubber.

However, since the above solution is acid or alkaline, it is preferable to use a different solution in terms of the environment. Considering a manufacturing process, further, treating in solution in a neutral region is in terms of safety.

Also, as disclosed in Patent Document 2, as for a manufacturing method of the steel cord for reinforcing the steel cord-rubber composite constituted by using a plurality of twisted filaments prepared by treating brass-plated steel wires with wet wire drawing, there is a method for adding resorcinol, which is considered as an adhesion improver between the steel cord and the coating rubber, in a wet lubricant used in steel wire drawing such that resorcinol adheres to the surfaces of the filaments.

However, since resorcinol is altered due to heat generated in wire drawing of the steel filament, a further improvement in adhesion durability of the steel cord and the coating rubber has been desired.

Meanwhile, to improve initial adhesion between the coating rubber and a metal reinforcing member in direct vulcanizing adhesion that is typically used for the tires and the like, it is known to use a rubber composition in which the coating rubber contains cobalt salt that acts as an adhesion promoter. However, the coating rubber composed of the rubber composition containing cobalt salt, in comparison to coating rubber composed of a rubber composition containing no cobalt salt, has a significant disadvantage in deterioration, crack-growth and the like.

As such, as disclosed in Patent Document 3, for example, there is a technique, by coating the steel cord constituted by using a plurality of twisted steel wires having brass-plated peripheral surfaces with coating rubber including a rubber composition containing a certain amount of boron-containing compound, for ensuring excellent adhesion to the steel rubber even when the coating rubber does not contain cobalt.

### RELATED ART DOCUMENTS

### PATENT DOCUMENTS

Patent Document 1: Japanese Patent Laid-Open No. 2001-234371
Patent Document 2: Japanese Patent Laid-Open No. 2004-66298
Patent Document 3: Japanese Patent Laid-Open No. 2009-215673

### SUMMARY OF INVENTION

### TECHNICAL PROBLEM

The technique disclosed in Patent Document 3 was reviewed and was capable of ensuring a certain adhesion between steel cords and the coating rubber. However, a further improvement in the adhesion has been desired in recent years.

Moreover, since the rubber composition constituting the coating rubber does not contain cobalt, a further improvement in suppressing a decrease in modulus has also been desired.

Therefore, an object of the present invention is to provide a steel cord-rubber composite that, even when the rubber composition constituting the coating rubber does not contain cobalt salt, has excellent adhesion to the steel cord and is capable of suppressing a decrease in the modulus.

### SOLUTION TO PROBLEM

As a result of intensive studies to achieve the above object, the present inventor has found that, by combining organic acid metal salt with a rubber composition for coating a steel cord and, further, by lowering an amount of free acid contained in the organic acid metal salt, an adhesion layer (such as copper sulfide) on a surface of the rubber composition to contact to the steel cord is prevented from melting and a certain modulus can be secured by the combined organic acid metal salt, as a result excellent adhesion may be achieved and a decrease in modulus may be suppressed. Thus, the present invention was accomplished.

The present invention provides a steel cord-rubber composite comprising a steel cord coated with a rubber composition containing zinc stearate, the zinc stearate containing 10 mass% or less of free acid, and the rubber composition contains 0.25 mass% or less of free acid, wherein the steel cord is constituted by using a plurality of twisted steel wires having peripheral surfaces plated with brass, wherein the steel cord is prepared by treating the brass-plated steel wires with wire drawing and then washing in solution containing cobalt salt.

For the steel cord-rubber composite of the present invention, by way of preferable example, the rubber composition, relative to 100 parts by mass of a rubber component, contains 0.5 to 5 parts by mass of zinc stearate and 1 to 10 parts by mass of sulfur. More preferably, N-cyclohexyl-2-benzothiazole sulfenamide is further added as a vulcanization accelerator.

Further, the steel cord of the steel cord-rubber composite of the present invention is preferably constituted by using a plurality of twisted steel wires having peripheral surfaces plated with brass having concentration of transition metals except Zn and Cu at 0.01 mass% or more, concentration of phosphorus at 2.5 mass% or less, and concentration of zinc at 15 mass% or less.

Furthermore, the steel cord is prepared by treating the brass-plated steel wire with wire drawing and then washing it in solution containing cobalt salt, where the cobalt salt is most preferably cobalt chloride, cobalt nitrate, cobalt sulfate, cobalt acetate, cobalt citrate, cobalt gluconate or cobalt acetylacetonato.

### EFFECT OF THE INVENTION

According to the present invention, the steel cord-rubber composite, even when the rubber composition constituting the coating rubber does not contain cobalt salt, having excellent adhesion to the steel cord and capable of suppressing a decrease in the modulus may be provided.

### DESCRIPTION OF EMBODIMENT

A steel cord-rubber composite according to the present invention is constituted by using a steel cord coated with a rubber composition containing zinc stearate containing 10 mass% of free acid as an additive.

Adopting the above composition enables to enhance adhesion of the rubber composition by activation of the zinc and the stearic acid and, further, to prevent free acid in zinc stearate from melting an adhesion layer (copper sulfide and the like) formed on a surface in contact with the steel cord coated with coating rubber. As a result, even when the rubber composition does not contain cobalt salt, excellent adhesion to the steel cord may be obtained. Moreover, rubber properties may be enhanced by zinc stearate contained in the rubber composition and, even when the rubber composition does not contain cobalt, a decrease in the modulus may be effectively suppressed.

If a free acid content in the zinc stearate is more than 10 mass%, the adhesive layer is dissolved by free acid and, as a result, sufficient adhesion may not be obtained. Also, since the adhesion becomes better inversely proportion to a content rate of free acid, the content rate of free acid in zinc stearate is preferably in a range of 0 to 5 mass%, and more preferably in a range of 0 to 1 mass%.

Further, the free acid content in the rubber composition as a whole according to the present invention is 0.25 mass% or less. If the content exceeds 0.25 mass%, even when the content rate of free acid in zinc stearate is adequately low, the adhesive layer may be dissolved and sufficient adhesion may not possibly be obtained.

Further, for the steel cord-rubber composite of the present invention, relative to 100 parts by mass of the rubber component, 0.5 to 5 parts by mass of zinc stearate is preferably contained. If a content of zinc stearate is less than 0.5 parts by mass relative to the rubber component, the content may be too little to sufficiently exert the effect of the present invention (excellent adhesion to the steel cord and ability to suppress a decrease in the modulus), while, if the content of
zinc stearate is more than 5 parts by mass relative to the rubber component, the content may be too much and may cause an increase in free acid in rubber, thereby hindering obtainment of the effect of the present invention, as well as posing a risk that non-dissolved zinc stearate in rubber may become an origin of a crack.

Further, for the steel cord-rubber composite of the present invention, the rubber composition, relative to 100 parts by mass of the rubber component, further contains 1 to 10 parts by mass of sulfur preferably, 2 to 8 parts by mass more preferably, and 4 to 6 parts by mass even more preferably. Here, if a sulfur content in the coating rubber relative to 100 parts by mass of the rubber component is less than 1 part by mass, a sufficient effect for initial adhesion may not be expected, while the content exceeding 10 parts by mass of sulfur may deteriorate the rubber properties.

Preferably, the rubber composition also contains, as an accelerator for improving a vulcanization rate, N-cyclohexyl-2-benzothiazole sulfenamide.

A content thereof, relative to 100 parts by mass of the rubber component, is preferably in a range of 0.01 to 2 parts by mass.

Preferably, the rubber composition does not contain cobalt. This is because, the coating rubber constituted by using the rubber composition including no cobalt, compared with the coating rubber constituted by using a rubber composition containing cobalt, prevents deterioration due to heat, moisture and oxygen and crack growth, thereby enabling improvement in durability.

Also, the rubber component in the rubber composition described above may be, but not limited to, for example, diene rubber such as natural rubber, polybutadiene rubber, polyisoprene rubber, ethylene-propylene copolymer, isobutylene-isoprene copolymer, polychloroprene and the like. Such rubber may be used alone or in combination of two or more thereof.

Further, the rubber composition described above, if necessary, may contain additives usually used in a rubber industry such as resin, carbon black, oil such as process oil and the like, a vulcanizing agent, a vulcanization accelerator, an antioxidant, a softening agent, zinc oxide, stearic acid and the like.

The rubber composition used for the steel cord-rubber composite according to the present invention may be produced by mixing zinc stearate with the rubber component, adding the above components as necessary and then carrying out a conventional method of kneading, heating and extruding.

The steel cord described above is constituted preferably by using a plurality of twisted steel wires having peripheral surfaces plated with brass having concentration of transition metals except Zn and Cu at 0.01 mass% or more, concentration of phosphorus at 2.5 mass% or less, and concentration of zinc at 15 mass% or less. This is because a sacrificial protection effect by the brass-plating enhances corrosion resistance of the steel cord.

Further, the steel cord is preferably the brass-plated steel wires that have been subjected to wire drawing and then washed in solution containing transition metal salt. When a surface of the brass-pated steel wire or a surface of the steel cord constituted by using the twisted brass-plated steel wires described above is washed by the solution containing cobalt salt oxidative formation is caused on the surface of the steel wire over time, dissolving a ZnO layer that inhibits adhesion to the coating rubber and exposing a Cu/Zn layer are occurred. Thereby, copper sulfide (CuₓS, ₓ is 1 or 2) formed in the coating rubber, as Cu is drawn out from the Cu/Zn layer during vulcanization of the steel cord-rubber composite, may improve the initial adhesion between the steel cord described above and the coating rubber. Therefore, even when the coating rubber for coating the steel cord does not contain transition metal salt such as cobalt, which causes to decrease the durability of the coating rubber as described above, the initial adhesion between the rubber composition and the steel cord may be improved.

A thickness of the brass-plating is preferably around 0.1 to 10 nm. If the thickness is less than 0.1 nm, the plating is insufficiently formed, possibly failing to sufficiently exert the sacrificial protection effect and lowering the corrosion resistance of the steel cord, as well as failing to satisfactorily ensure adhesion to the rubber composition described above. On the other hand, if the thickness of the brass-plating exceeds 10 nm, plating is too thick and an anticorrosion effect of the plating is saturated, which is not economical.

In washing the steel wire described above, the above-mentioned cobalt acts as an adhesion promoter of the rubber composition and the plated steel cord. Suitable cobalt salt may be, in particular, cobalt chloride, cobalt nitrate, cobalt sulfate, cobalt acetate, cobalt citrate, cobalt gluconate, or cobalt acetylacetonato.

ApH of the above-mentioned solution used for washing is preferably in a range of 5 to 8. When pH of the above-mentioned solution is higher or lower than the range, the plating is adversely affected, lowering adhesion between the steel cord and the rubber composition. Further, in terms of an environmental impact, pH of the above-mentioned solution used for washing is preferably falls within a neutral region of 5 to 8. As for a condition of washing, when the solution is, for example, cobalt acetate containing solution, a washing time is preferably 30 to 60 seconds for concentration of cobalt acetate at 10g/L, but may be appropriately determined based on concentration of solution.

The steel cord-rubber composite of the present invention may be widely, but not exclusively, used in manufacture of various rubber products and components such as tires, rotation transmission belts, conveyor belts, hoses and the like.

It is also possible to produce a tire characterized by adopting the steel cord-rubber composite of the present invention as a reinforcing member. Further, except for using the steel cord-rubber composite of the present invention, a tire according to the present invention is not particularly limited but may employ a composition of a known tire.

### [Examples]

Although the following describes the present invention in further detail by using examples and comparative examples, the present invention is not limited thereto.

### (Examples 1-3, Comparative Examples 4-6)

Brass-plated (Cu: 63 mass%, Zn: 37 mass%) steel wires were twisted to form steel cords of a 1×5 structure. Next, the steel cords were washed in 10g/L of cobalt acetate solution (pH 6.0) for 30 seconds and dried at 50 °C for 1 minute. The steel cords were then arranged parallel to one another and, from both upper and lower directions, coated with each rubber composition having compounding illustrated in Table 1 and vulcanized under conditions illustrated in Table 1. Thus samples were prepared.

### (Comparative Examples 1-3)

Brass-plated (Cu: 63 mass%, Zn: 37 mass%) steel wires were twisted to form the steel cords of the 1×5 structure. The steel cords were arranged parallel to one another and, from both upper and lower directions, coated with each rubber composition having compounding illustrated in Table 1 and then vulcanized under conditions illustrated in Table 1. Thus samples were prepared.

### <Evaluation>

For each sample obtained in Examples 1 to 3 and Comparative Examples 1 to 5, evaluation was carried out for the following items.

### (Vulcanization Rate)

For unvulcanized rubber composition according to each sample, by using a curelastometer manufactured by Toyo Seiki Co., Ltd, a curelasto-test was carried out under a condition of 145 °C. T_{0.9} represents a time (minute) when an increase in torque due to a vulcanization reaction reaches 90% of a total. A smaller T_{0.9} (minute) indicates a faster vulcanization rate.

### (Tensile Stress)

For the unvulcanized rubber composition according to each sample, a tensile stress at 300% elongation was measured as a representative indicator of physical properties. In particular, by using a JIS 3 dumbbell type specimen, in accordance with JIS K 6251-2004, the tensile stress at 300% elongation was measured and expressed as an index relative to a tensile stress of Comparative Example 1, which is set to 100. A greater index of each sample indicates a greater tensile stress at 300% elongation and a good condition.

### (Adhesion)

As for the initial adhesion, each sample was vulcanized at 145 °C for 30 minutes and then, in accordance with ASTM-D-2229, the steel cord was pulled out from each sample and a covering state of the rubber was visually observed. Evaluation was carried out by expressing each state as 0 to 100 % as an adhesion indicator.

As for heat-resistant adhesion, each sample was heated at 145 °C for 30 minutes and then allowed to deteriorate at 100 °C for two days. To evaluate, the covering state of the rubber of each sample was visually observed and expressed as 0 to 100 %.

As for hygrothermal adhesion, each sample was vulcanized at 145 °C for 30 minutes and then allowed to deteriorate at 100 °C and 100% humidity for 4 days (under a hygrothermal aging condition). To evaluate, the covering state of the rubber of each sample was visually observed and expressed as 0 to 100 %.

### (Physical properties of the rubber after deterioration)

To evaluate the physical properties of the rubber after deterioration, each sample was vulcanized at 145 °C for 30 minutes and allowed to age at 100 °C for 2 days, and then subjected to a tensile test in accordance with JIS K6251 to measure Eb (elongation at break (%)) and Tb (tensile strength (Mpa)) and calculate TF (toughness: Eb×Tb). TF of each sample is expressed as an index value relative to a TF of Comparative Example 1, which is set to 100. A larger value of TF indicates a better condition.

**[Table 1]**

| | | | Example 1 | Example 2 | Example 3 | Comparative Example 1 | Comparative Example 2 | Comparative Example 3 | Comparative Example 4 | Comparative Example 5 | Comparativ e Example 6 |
|---|---|---|---|---|---|---|---|---|---|---|---|
| Steel cord Pre-Trea tment Method | | | Cobalt Acetate Treatment | Cobalt Acetate Treatment | Cobalt Acetate Treatment | - | - | - | Cobalt Acetate Treatment | Cobalt Acetate Treatment | Cobalt Acetate Treatment |
| | Natural Rubber | | 100 | 100 | 100 | 100 | 100 | 100 | 100 | 100 | 100 |
| | Carbon Black (HAF) | | 60 | 60 | 60 | 60 | 60 | 60 | 60 | 60 | 60 |
| | Zinc Oxide | part By Mass | 6 | 6 | 6 | 6 | 6 | 6 | 6 | 6 | 6 |
| Rubber Compounding | Antioxidant *1 | | 1 | 1 | 1 | 1 | 1 | 1 | 1 | 1 | 1 |
| | Vulcanization Accelerator A *2 | | 0 | 0.8 | 0.8 | 0.8 | 0 | 0 | 0.8 | 0 | 0 |
| | Vulcanization Accelerator B *3 | | 0.73 | 0.73 | 0.73 | 0 | 0.73 | 0.73 | 0 | 0.73 | 0.73 |
| | Cobalt Fatty Acid Salt *4 | | 0 | 0 | 0 | 1 | 1 | 0 | 0 | 0 | 0 |
| | Zinc Stearate *5 (Content of Free Acid) | | 0.7 (0.01 masst%) | 0.7 (5.0 mass%) | 0.7 (10.0 mass%) | 0 | 0 | 0.7 (15.0 mass%) | 0 | 0.7 (15.0 mass%) | 0 |
| Evaluation | | | | | | | | | | | |
| Vulcani zation Rate (T0.9) | | Index | 60 | 60 | 65 | 100 | 60 | 65 | 120 | 65 | 65 |
| 100% Modulus | | | 92 | 90 | 95 | 100 | 104 | 104 | 76 | 95 | 75 |
| Initial Adhesion | Rubber Coating Rate | % | 100 | 100 | 100 | 100 | 100 | 20 | 100 | 100 | 100 |
| Heat-ResistantAdhesion | | | 80 | 90 | 90 | 100 | 100 | 10 | 100 | 60 | 40 |
| Hygrothermal adhesion | | | 80 | 80 | 75 | 30 | 55 | 10 | 20 | 80 | 90 |
| TF afterHeat Deterioration | | Index | 115 | 125 | 125 | 100 | 90 | 110 | 115 | 125 | 125 |

| | | | | | | | | | | | |
|---|---|---|---|---|---|---|---|---|---|---|---|
| *1 manufactured by Ouchi Shinko Chemical Industrial Co., Ltd., NOCRAC 6C, N-phenyl-N'-(1,3-dimethylbutyl)-p-phenylenediamine *2 manufactured by Ouchi Shinko Chemical Industrial Co., Ltd., Nocceler DZ, N, N'-dicyclohexyl-2-benzothiazylsulfenamide *3 manufactured by Ouchi Shinko Chemical Industrial Co., Ltd., Nocceler CZ, N-cyclohexyl-2-benzothiazylsulfenamide *4 manufactured by OMG, Manobondo C22.5, cobalt content: 22.5 mass% *5 manufactured by Tokyo Chemical Industry Co., Ltd. | | | | | | | | | | | |

As can be seen from results in Table 1, even when cobalt salt that has conventionally been used as an adhesive promoter is not included, the Examples in which the steel cord is coated with the rubber composition containing organic acid metal salt containing 10 mass% or less of free acid have a high effect on the adhesion, comparing to Comparative Examples 4 and 6 in which the rubber composition does not contain organic acid metal salt, and have high effects for all other evaluation items as well. Further, these Examples, comparing to Comparative Examples 1 and 2 in which the rubber composition contains cobalt salt, indicates excellent results of adhesion properties after hygrothermal aging and physical properties after thermal aging and, comparing to Comparative Examples 3 and 5 in which zinc stearate is contained and the free acid content exceeds 10 mass%, significant improvements in heat adhesion.

According to the present invention, even when cobalt salt is not contained in the rubber composition constituting the coating rubber, the steel cord-rubber composite having excellent adhesion to the steel cord and capable of suppressing a decrease in the modulus may be provided.

## Claims

1. A steel cord-rubber composite comprising a steel cord coated with a rubber composition containing zinc stearate, the zinc stearate containing 10 mass% or less of free acid, and the rubber composition contains 0.25 mass% or less of free acid,
wherein the steel cord is constituted by using a plurality of twisted steel wires having peripheral surfaces plated with brass,
wherein the steel cord is prepared by treating the brass-plated steel wires with wire drawing and then washing in solution containing cobalt salt.

2. The steel cord-rubber composite according to claim 1, wherein the rubber composition, relative to 100 parts by mass of rubber component, contains 0.5 to 5 parts by mass of zinc stearate and 1 to 10 parts by mass of sulfur.

3. The steel cord-rubber composite according to claim 2, wherein the rubber composite further contains N-cyclohexyl-2-benzothiazole sulfenamide as a vulcanization accelerator.

4. The steel cord-rubber composite according to claim 1, wherein the steel cord is constituted by using a plurality of twisted steel wires having peripheral surfaces plated with brass having concentration of transition metals except Zn and Cu at 0.01 mass% or more, concentration of phosphorus at 2.5 mass% or less, and concentration of zinc at 15 mass% or less.

5. The steel cord-rubber composite according to claim 1, wherein the cobalt salt is cobalt chloride, cobalt nitrate, cobalt sulfate, cobalt acetate, cobalt citrate, cobalt gluconate or cobalt acetylacetonato.

## Patentansprüche

1. Kautschuk-Stahl-Seilverbundstoff, umfassend ein Stahlseil, das mit einer Kautschukzusammensetzung beschichtet ist, die Zinkstearat enthält, wobei das Zinkstearat einen Massenanteil von 10 % oder weniger freie Säure enthält und die Kautschukzusammensetzung einen Massenanteil von 0,25 % oder weniger freie Säure enthält,
wobei das Stahlseil unter Verwendung einer Vielzahl von gedrehten Stahldrähten, die mit Messing plattierte Umfangsflächen aufweisen, gebildet ist,
wobei das Stahlseil durch Behandeln der messingplattierten Stahldrähte mit Drahtziehen und anschließendes Waschen in cobaltsalzhaltiger Lösung hergestellt ist.

2. Kautschuk-Stahl-Seilverbundstoff nach Anspruch 1, wobei die Kautschukzusammensetzung relativ zu 100 Gewichtsteilen Kautschukkomponente 0,5 bis 5 Gewichtsteile Zinkstearat und 1 bis 10 Gewichtsteile Schwefel enthält.

3. Kautschuk-Stahl-Seilverbundstoff nach Anspruch 2, wobei die Kautschukzusammensetzung ferner N-cyclohexyl-2-benzothiazolsulfenamid als Vulkanisationsbeschleuniger enthält.

4. Kautschuk-Stahl-Seilverbundstoff nach Anspruch 1, wobei das Stahlseil unter Verwendung einer Vielzahl von gedrehten Stahldrähten, die mit Messing plattierte Umfangsflächen aufweisen, gebildet ist, wobei das Messing eine Konzentration von Übergangsmetallen ausgenommen Zn und Cu mit einem Massenanteil von 0,01 % oder mehr, eine Konzentration von Phosphor mit einem Massenanteil von 2,5 % oder weniger und eine Konzentration von Zink mit einem Massenanteil von 15 % oder weniger aufweist.

5. Kautschuk-Stahl-Seilverbundstoff nach Anspruch 1, wobei das Cobaltsalz Cobaltchlorid, Cobaltnitrat, Cobaltsulfat, Cobaltacetat, Cobaltcitrat, Cobaltgluconat oder Cobaltacetylacetonat ist.

## Revendications

1. Composite câble d'acier-caoutchouc comprenant un câble d'acier enduit d'une composition de caoutchouc contenant du stéarate de zinc, le stéarate de zinc contenant 10% en masse ou moins d'acide libre, et la composition de caoutchouc contient 0,25% en masse ou moins d'acide libre,
où la corde d'acier est constituée en utilisant une pluralité de fils d'acier torsadés ayant des surfaces périphériques plaquées avec du laiton,
où la corde d'acier est préparée par le traitement des fils d'acier plaqués avec du laiton avec tréfilage puis lavage dans une solution contenant du sel de cobalt.

2. Composite câble d'acier-caoutchouc selon la revendication 1, où la composition du caoutchouc, par rapport à 100 parties en masse de composant en caoutchouc, contient 0,5 à 5 parties en masse de stéarate de zinc et de 1 à 10 parties en masse de soufre.

3. Composite câble d'acier-caoutchouc selon la revendication 2, où le caoutchouc composite contient en outre du N-cyclohexyle-2-benzothiazole sulfénamide comme accélérateur de vulcanisation.

4. Composite câble d'acier-caoutchouc selon la revendication 1, où le câble d'acier est constituée en utilisant une pluralité de fils d'acier torsadés ayant des surfaces périphériques plaquées avec du laiton d'une concentration de métaux de transition à l'exception de Zn et de Cu à 0,01% en masse ou plus, d'une concentration de phosphore de 2,5% en masse ou moins et une concentration de zinc de 15% en masse ou moins.

5. Composite câble d'acier-caoutchouc selon la revendication 1, où le sel de cobalt est le chlorure de cobalt, le nitrate de cobalt, le sulfate de cobalt, l'acétate de cobalt, le citrate de cobalt, le gluconate de cobalt ou l'acétylacétonato-cobalt.
